# FASCICULE DE BREVET EUROPEEN

(11) **EP 3 672 719 B1**
(45) Date de publication et mention de la délivrance du brevet: **30.06.2021**
(21) Numéro de dépôt: 17777615.0
(22) Date de dépôt: 23.08.2017
(51) Int. Cl.: B01J 8/00

(54) **DISPOSITIF MOBILE DE REMPLISSAGE D'ENCEINTES DE RÉACTEURS CATALYTIQUES**
BEWEGLICHE VORRICHTUNG ZUM FÜLLEN VON KATALYTISCHEN REAKTORKAMMERN
MOVABLE DEVICE FOR FILLING CATALYTIC REACTOR CHAMBERS

(43) Date de publication de la demande: 01.07.2020
(73) Titulaire: SUEZ RV OSIS Industrial Cleaning, 59279 Loon-Plage (FR)
(72) Inventeur: SCHMIDT, Christian, 67720 Hoerdt (FR); PLAS, Jean-Michel, 76600 LE HAVRE (FR); IDCZAK, Emmanuel, 76430 Graimbouville (FR)
(74) Mandataire: Marks & Clerk France
(86) Numéro de dépôt international: PCT/FR2017/052264
(87) Numéro de publication internationale: WO 2019/038483

(56) Documents cités:
- EP-A1- 2 191 889
- DE-B3-102016 101 508
- US-A- 2 985 341

## Description

### Objet de l'invention

La présente invention se rapporte à un dispositif mobile de remplissage d'au moins une enceinte avec des particules solides à l'état divisé, plus particulièrement de remplissage d'une pluralité d'enceintes d'un réacteur à lit de catalyseur fixe, de type industriel, les enceintes pouvant être des tubes disposées sensiblement parallèlement dans le réacteur.

### Etat de la technique

Les réacteurs à lit de catalyseur fixe sont couramment utilisés dans l'industrie chimique ou électrochimique, pétrolier ou pétrochimique. Ils sont habituellement constitués d'une multitude d'enceintes de réaction, généralement plusieurs milliers de tubes disposés verticalement et sensiblement parallèles les uns aux autres, et présentent la particularité d'avoir une longueur importante par rapport à leur diamètre, typiquement d'un rapport qui peut être de l'ordre de 100 ou plus.

Les enceintes de réaction sont remplis d'un matériau catalytique, un catalyseur, qui se trouve sous la forme de particules solides à l'état divisé, pouvant par exemple avoir la forme de billes, de granules cylindriques, de bâtonnets, de pastilles, et ayant généralement un diamètre ou une longueur de l'ordre de 5 à 10 mm. Ce matériau catalytique peut être plus ou moins fragile selon sa forme et sa composition et en particulier il peut être friable.

Etant donné la forme et la taille des enceintes de réaction, leur remplissage avec le matériau catalytique peut s'avérer problématique. En effet, chaque enceinte doit être remplie d'une façon contrôlée et d'une manière précise, sans dégradation des particules de catalyseurs.

Un chargement manuel de la multitude d'enceintes étant fastidieux, chronophage, et onéreux en termes de temps d'arrêt de production du réacteur, il a été proposé d'employer des dispositifs comprenant des dosettes de catalyseurs comprenant une quantité déterminée de catalyseur, l'opérateur plaçant les dosettes en regard de chaque enceinte à remplir, et le catalyseur étant versé dans les enceintes généralement à l'aide d'un entonnoir.

La confection et la manipulation de telles dosettes, le cheminement du catalyseur au travers des entonnoirs, et la répétition des opérations, rendent la qualité de cette méthode de chargement aléatoire.

Il a été également proposé d'employer des dispositifs permettant à la fois le dosage du catalyseur et le remplissage des enceintes.

Par exemple, le document US2985341 décrit un dispositif comprenant une multitude de tubes de mesures verticaux et comprenant des moyens de contrôle de remplissage de ces tubes de mesures, prenant la forme de tubes flexibles qui sont comprimés afin d'empêcher l'entrée et/ou la sortie du catalyseur de ces tubes de mesures.

Le document US 3 788 370 décrit un dispositif comprenant un réservoir de stockage temporaire des particules, un réservoir de débordement au-dessous du réservoir de stockage temporaire, des tubes de mesure verticaux traversant le fond du réservoir de débordement, des moyens de nivèlement des particules dans les tubes de mesure, des moyens de récupération du surplus des particules ayant été déchargées dans le réservoir de débordement et des moyens de positionnement pour localiser les tubes de mesure au dessus des tubes à remplir.

Le document WO2015036693 décrit un dispositif comprenant des colonnes de dosage verticales, des moyens de libération du catalyseur vers un manchon débouchant vers le tube à remplir, ces moyens ayant la forme d'une guillotine mobile, disposée sous les colonnes de dosages, le dispositif comprenant en outre des moyens de vibration pour faciliter le passage du catalyseur des colonnes de dosage vers le tube au travers des manchons.

Néanmoins, dans de tels dispositifs, les particules de catalyseur peuvent former des bouchons, en particulier à l'entrée, mais également le long, des colonnes de dosage. Cet inconvénient est d'autant plus marqué pour des réacteurs dans lesquels les enceintes peuvent comprendre plusieurs couches de matériau catalytique de nature différente, avec, en particulier, des dimensions granulaires décroissantes de la couche supérieure à la couche inférieure.

Par ailleurs, compte tenu de la fragilité, la friabilité, et la composition du matériau catalytique qui comprend généralement des composés pour certains toxiques, y compris des métaux lourds, il est approprié d'empêcher, ou à tout le moins de limiter autant que possible, la génération et la dispersion de poussières afin que les opérateurs chargés du remplissage des enceintes n'y soient pas ou peu exposés.

Pour un dispositif de dosage et de remplissage, le document WO2015036693 décrit l'emploi de moyens de récupération de la poussière formée par le versement du catalyseur dans les enceintes du réacteur, qui sont disposés entre le système de dosage du dispositif et les enceintes du réacteur.

### Buts de l'invention

La présente invention vise à fournir un dispositif de dosage et de remplissage d'au moins une enceinte, de préférence d'un réacteur à lit de catalyseur fixe, avec des particules solides, qui ne présentent pas les inconvénients de l'état de la technique.

La présente invention vise à fournir une alternative aux solutions de l'état de la technique existantes.

La présente invention vise à fournir un dispositif dont le remplissage et/ou la décharge en particules solides sont améliorés, rendant le dispositif plus efficace, plus précis et plus constant dans le remplissage de l'enceinte ou des enceintes du réacteur.

La présente invention vise également à fournir un dispositif préservant le manipulateur des éventuelles dégagement de poussière durant sa manipulation.

### Résumé de l'invention

La présente invention porte sur un dispositif mobile de remplissage d'une ou plusieurs enceintes avec des particules solides à l'état divisé, le dispositif comprenant un châssis mobile, des moyens de dosage des particules solides comprenant deux ou plusieurs plaques de dosage comprenant une ou plusieurs perforations, les plaques de dosage étant disposées l'une sur l'autre afin que la ou les perforations d'une plaque de dosage soi(en)t en rapport avec la ou les perforations de la plaque de dosage adjacente, pour former une ou plusieurs colonnes de dosage, destinées à être mises en rapport avec la ou les enceintes, des moyens de libération simultanée des particules solides des moyens de dosage vers la ou les enceintes, un bac de stockage des particules solides qui comprend une paroi de fond comprenant des perforations étant, ou pouvant se mettre, en rapport avec la ou les colonnes de dosage, et comprenant des moyens de déstockage libérant les particules solides du bac de stockage vers la ou les colonnes de dosage.

Selon des modes particuliers de l'invention, le dispositif selon l'invention comprend au moins une, ou une combinaison quelconque appropriée, des caractéristiques suivantes :
- l'une des deux plaques de dosage, ou une première série de plaques de dosage, est ou sont fixe(s) par rapport au châssis du dispositif, et l'autre plaque, ou une seconde série de plaques de dosage, est ou sont mobile(s), par rapport à la ou lesdites plaques de dosage fixe(s), dans un mouvement sensiblement horizontal,
- le mouvement de la plaque ou des plaques de dosages mobile(s) se fait au moyen d'un arbre à cames, dont les cames viennent en contact avec au moins un bord de ladite ou lesdites plaques mobiles,
- le dispositif selon l'invention comprend des moyens de régalage du dosage en particules solides comprenant une plaque intermédiaire mobile, éventuellement amovible, passant d'une position dite « fermée » dans laquelle une portion de la ou des colonnes de dosage est obturée, à une position dite « ouverte », permettant la libération des particules solides comprises dans la portion de la ou des colonnes de dosage, et inversement, ou les moyens de régalage étant constitués par les plaques de dosages qui sont toutes, ou certaines seulement, amovibles
- la plaque intermédiaire mobile comprend des perforations qui, lorsque la plaque intermédiaire mobile adopte la position « fermée », ne sont pas en rapport avec la ou les colonnes de dosage, et sont en rapport avec la ou les colonnes de dosage lorsque la plaque intermédiaire mobile adopte la position « ouverte »,
- la ou les colonnes de dosage a, ou ont, une forme sensiblement conique,
- les moyens de déstockage du bac de stockage comprennent une plaque de déstockage mobile passant d'une position « fermée », dans laquelle les particules sont retenues dans le bac de stockage, à une position dite « ouverte », permettant la libération des particules solides du bac de stockage vers la ou les colonnes de dosage, et inversement, ou les moyens de déstockage sont constitués des perforations du bac de stockage qui ne se trouvent pas en regard, ou seulement partiellement, avec l'ouverture de la colonne ou des colonnes de dosage, avant et pendant, la réception des particules solides dans le bac de stockage,
- le dispositif selon l'invention en outre des moyens de récupération des poussières, formées par et au cours de l'utilisation du dispositif, comprenant des premiers moyens disposés au niveau du bac de stockage des particules solides et des seconds moyens disposés au niveau de la jonction entre les moyens de dosage et l'enceinte ou les enceintes du réacteur.

La présente invention porte également sur l'utilisation du dispositif selon l'invention pour le dosage et le remplissage d'une ou plusieurs enceintes d'un réacteur à lit de catalyseur fixe, avec des particules solides de catalyseur à l'état divisé.

La présente invention porte en outre sur une méthode de dosage et de remplissage d'une ou plusieurs enceintes comprenant les étapes de prendre le dispositif selon l'invention, le disposer au-dessus de la ou les enceintes, de façon à ce que la ou les colonnes de dosage se trouve(nt) en rapport avec l'ouverture supérieure de la ou des enceintes, de verser des particules solides à l'état divisé dans le bac de stockage dont les moyens de déstockage sont en position fermée, les moyens de libération simultanée étant inactivés, de répartir les particules solides dans le bac de stockage, d'activer les moyens de déstockage afin de libérer les particules solides dans la ou les colonnes de dosage formée(s), de remplir la ou les colonnes de dosage avec les particules solides jusqu'à affleurer le fond du bac de stockage, ou à affleurer l'ouverture supérieure de la ou les colonnes de dosage, d'évacuer l'excédent des particules du bac de stockage vers un bac de récupération, d'ouvrir les moyens de libération simultanée des particules solides pour remplir la ou les enceintes et les refermer lorsqu'elle(s) est (sont) remplie(s).

Selon des modes particuliers de l'invention, la méthode selon l'invention comprend au moins une, ou une combinaison quelconque appropriée, des caractéristiques suivantes :
- la méthode comprend en outre une étape d'activation des moyens de vibration ou d'oscillation du bac de stockage avant et/ou pendant l'activation des moyens de déstockage, et/ou une étape d'activation des moyens de vibration ou d'oscillation des moyens de dosage avant et/ou pendant le remplissage et/ou la décharge de la colonne ou des colonnes de dosage,
- la méthode comprend en outre une étape d'activation des moyens de récupération des poussières au niveau du bac de stockage durant l'étape de versement des particules solides dans le bac de stockage et/ou durant l'activation des moyens de déstockage, et/ou une étape d'activation des moyens de récupération des poussières au niveau au niveau de la jonction entre les moyens de dosage et l'enceinte ou les enceintes,
- la méthode comprend en outre une étape préalable de calibrage du dispositif selon l'invention, en réglant la hauteur de la colonne ou des colonnes de dosage, en ajoutant ou supprimant des plaques de dosage et/ou en utilisant une plaque intermédiaire disposée entre des plaques de dosage pour former une hauteur de colonne de dosage donnée, la plaque intermédiaire passant de la position fermée à la position ouverte avant, ou de façon concomitante, avec l'activation des moyens de libération simultanée,
- la méthode comprend en outre une étape de vérification du remplissage de l'enceinte ou des enceintes et si leur remplissage n'est pas suffisant, de répéter les étapes de la méthode selon l'invention, éventuellement à l'exception de l'étape de calibrage du dispositif, jusqu'à attendre la hauteur de particules solides désirée dans ladite ou lesdites enceintes.

### Brève description des figures

La figure 1 est une vue schématique, d'un premier coté, d'un mode de réalisation particulier du dispositif selon l'invention, dans lequel le bac de stockage est mobile et partiellement levé.
La figure 2 est une vue schématique du coté opposé à celui représenté à la figure 1 et dans lequel le bac de stockage est totalement levé.
La figure 3 est une vue schématique, du dessus, du mode de réalisation particulier du dispositif représenté à la figure 1, dans lequel le bac de stockage mobile est en position baissée.
La figure 4 est une vue schématique, du dessus, du mode de réalisation particulier du dispositif représenté à la figure 1, dans lequel le bac de stockage mobile est en position totalement levée.
La figure 5 est une vue schématique, d'une coupe longitudinale, du mode de réalisation représenté à la figure 3.
La figure 6 est une vue schématique, en coupe transversale, d'une plaque de dosage des moyens de dosage comprenant différentes formes de perforations.
La figure 7 est une vue schématique, en coupe longitudinale, de deux plaques de dosage, l'une au-dessus de l'autre, comprenant différentes formes de section des perforations.
La figure 8 est une vue schématique, en coupe longitudinale, du positionnement d'une plaque intermédiaire des moyens de réglage du dosage, en position ouverte, dans les moyens de dosage, selon un mode particulier de réalisation de l'invention.

### Description détaillée de l'invention

Dans la suite de la description et des revendications, les termes « haut », « bas », « supérieur », « inférieur », « vertical » ou « horizontal » font référence à la position verticale normale d'utilisation du dispositif 1 selon l'invention.

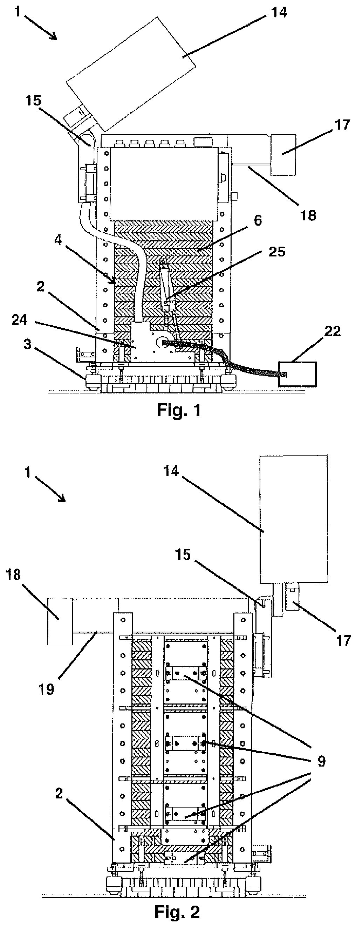

Le dispositif 1 selon l'invention est un dispositif mobile. De préférence, il comprend un châssis 2 d'allure parallélépipédique, muni de moyens de déplacement 3, tels que par exemple des roues ou des roulettes (figure 1).

Le dispositif 1 comprend des moyens de dosage 4 en particules solides 5, de préférence en catalyseur, comprenant au moins deux plaques de dosage 6, rigides, disposées horizontalement et empilées l'une sur l'autre. De préférence, le dispositif comprend une multitudes de plaques de dosage 6 empilées les unes sur les autres (figures 1, 2, 5 et 7).

Les plaques de dosage 6 sont de préférence fait d'un matériau inerte, de préférence au moins inerte physiquement et chimiquement par rapport aux particules solides 5 à charger. Elles sont faites de préférence en matériau plastique, en polyamide PA6, ou PTFE.

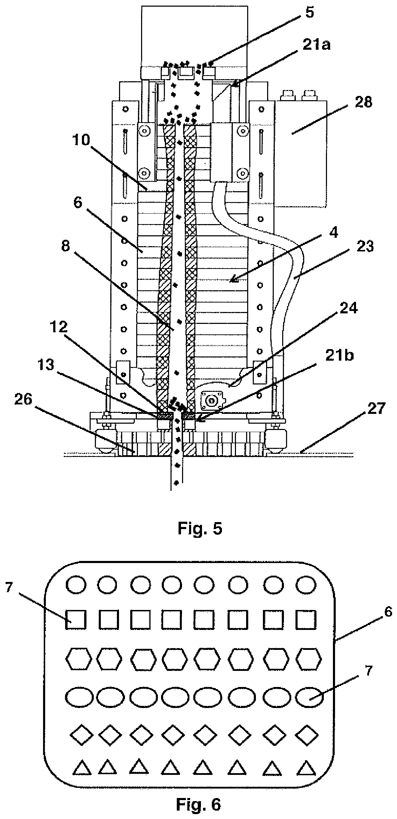

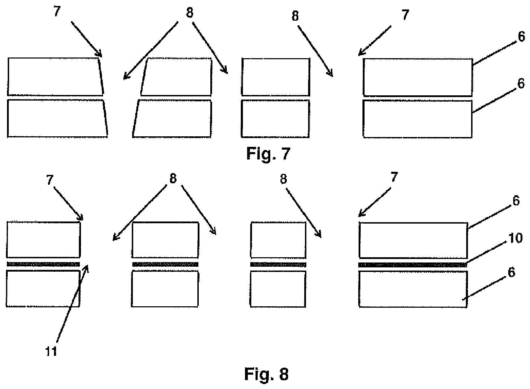

Les plaques de dosage 6 possèdent une forme et des dimensions adéquates, adaptées au dispositif 1 selon l'invention. En particulier leur forme et leur épaisseur sont choisies en fonction de la forme générale du réacteur, du nombre d'enceintes à remplir, et en particulier en fonction de la quantité et/ou du volume de particules solides 5 à charger. De préférence, les plaques de dosage 6 ont une forme parallélépipédique, avantageusement carrée ou rectangulaire, ou bien circulaire, et ont, avantageusement, une section transversale carrée ou rectangulaire. Elles comprennent au moins deux surfaces sensiblement continues et sensiblement planes, aptes à entrer en contact avec au moins une surface sensiblement continue et plane d'une autre plaque de dosage contiguë (figures 6 et 7).

Les plaques 6 de dosage comprenant au moins une perforation 7, un trou débouchant au travers de leur épaisseur. De préférence, elles comprennent une multitude de perforations 7 (figures 6 et 7).

Dans le dispositif 1 selon l'invention, les plaques de dosage 6 sont disposées les unes par rapport aux autres, sensiblement horizontalement, de manière à ce que la ou les perforations 7 d'une plaque de dosage 6 soi(en)t en rapport avec la ou les perforations 7 de la plaque de dosage 6 située en dessous et/ou au-dessus, afin de former au moins une colonne de dosage 8, de préférence la multitude de perforations 7 formant une multitude de colonnes de dosage 8, se trouvant verticales ou sensiblement verticales, et destinées à être mises en rapport avec l'enceinte ou les enceintes à remplir (figure 5).

Les perforations 7 sont de toute forme et dimension adéquate, de préférence en rapport avec la forme de l'enceinte ou des enceintes à charger et/ou avec la forme, les dimensions, et la quantité des particules solides 5 à recevoir, donc à doser.

De préférence, les perforations 7 ont des dimensions et une forme identiques au sein d'une même plaque de dosage 6 et/ou d'une plaque de dosage 6 à une autre, tant pour ce qui concerne leur section transversale que pour leur section longitudinale.

Les perforations 7 peuvent avoir une section longitudinale, donc dans l'épaisseur des plaques de dosage, de forme carrée, rectangulaire, trapézoïdale, d'un trapèze ou d'un trapèze rectangle (figure 7). Elles peuvent avoir une section transversale, donc à la surface des plaques de dosage, de forme ronde, ovoïde, ovale ou elliptique, de la forme d'un quadrilatère, un carrée, un rectangle, un trapèze, un losange, un triangle ou d'un polygone (figure 6).

Dans un mode de réalisation particulier de l'invention, les perforations 7 ont une section transversale circulaire d'un diamètre compris entre 30 et 36 mm.

De préférence, les perforations 7 ont une forme de tronc de cône ou de tronc de cône inversé.

De préférence, pour un réacteur ayant des enceintes d'allure tubulaire, les perforations 7 ont une section transversale de forme circulaire et une section longitudinale carrée, rectangulaire ou trapézoïdale.

Dans un mode de réalisation particulier les perforations 7 ont une section transversale de même forme et de même dimension au sein d'une même plaque de dosage 6, mais possèdent des dimensions différentes d'une plaque de dosage 6 à une autre et éventuellement également une section longitudinale de forme différente.

De préférence, du haut vers le bas des moyens de dosage 4, les plaques de dosages 6 comprennent des perforations 7 ayant une dimension croissante, un diamètre croissant pour des perforations circulaires, avantageusement de l'ordre d'environ 4% entre deux plaques adjacentes, ce qui donne à la colonne ou aux colonnes de dosage 8 une forme sensiblement conique (figure 5). Avantageusement, les perforations 7 peuvent également comprendre une section longitudinale de forme trapézoïdale.

Des colonnes de dosage 8, ayant, sur tout ou partie de sa longueur, une forme conique, présentent l'avantage d'améliorer la qualité de leur remplissage en particules solides 5, ce qui améliore le dosage, et participe également à une meilleure décharge des particules solides 5 dans l'enceinte ou les enceintes du réacteur.

De préférence, le dispositif 1 selon l'invention comprend en outre des moyens de vibration 9 ou d'oscillation des moyens de dosage 4. Avantageusement, ces moyens comprennent, ou mettent en œuvre, au moins une des deux plaques de dosage 6, ou une première série de plaques de dosage 6, qui est fixe par rapport au châssis 2 du dispositif 1, alors qu'une deuxième plaque 6 ou seconde série de plaques de dosage 6, est mobile par rapport aux plaques de dosage 6 fixes. De préférence, le dispositif 1 comprend autant de plaques de dosage 6 mobiles que de plaques de dosage 6 fixes, la ou les plaques de dosage 6 mobiles étant disposée(s) au-dessus et/ou en dessous d'une plaque de dosage 6 fixe. De préférence, la ou les plaques de dosage 6 mobiles se déplace(nt) selon un mouvement horizontal, ou sensiblement horizontal, de préférence un mouvement de vas-et-vient ou orbital, avantageusement dans un mouvement de vibration ou d'oscillation. Les plaques de dosage 6 mobiles se déplacement latéralement par rapport aux plaques de dosage 6 fixes, sans pour autant que leurs perforations 7, en particulier la lumière des perforations 7, ne soient décalées par rapport à celles des autres plaques de dosage 6. De préférence, l'amplitude du mouvement est choisie afin de minimiser cet effet de décalage afin de ne pas perturber le flux de particules solides 5 dans la ou les colonnes de dosage 8. Il peut s'agir par exemple d'une amplitude d'environ 1mm. Toutefois, dans le mode de réalisation dans lequel la ou les colonnes de dosage 8 ont une lumière de forme conique, cette forme présente l'avantage de réduire, minimiser et même supprimer l'incidence de ce décalage des plaques de dosage 6 sur le flux de particules solides 5 et le mouvement d'une plaque de dosage 6 mobile par rapport à une plaque de dosage 6 fixe peut être plus important.

De préférence, les moyens de vibration 9 des moyens de dosage 4 comprennent soit un ou plusieurs vibreurs, soit un arbre à cames, dont les cames viennent en contact, directement ou indirectement, avec une partie, de préférence au moins un bord, des plaques de dosage mobiles.

L'emploi de plaques de dosage 6 mobiles présente l'avantage de décolmater les particules solides 5 à l'entrée et/ou le long des colonnes de dosage 8 pour leur éviter de former des bourrages. Ainsi, le chargement et le déchargement des particules 5 dans les moyens de dosage 4 s'en trouvent améliorés, ce qui permet d'obtenir un remplissage plus efficace, et constant, de l'enceinte ou des enceintes du réacteur.

De préférence, le dispositif 1 comprend des moyens de réglage du dosage, permettant de régler la quantité de particules solides 5 à verser dans l'enceinte ou les enceintes du réacteur. Avantageusement, ces moyens sont constitués, ou mettent en œuvre, les moyens de dosages 4 eux-mêmes, en particulier les plaques de dosages 6 elle-même. En effet, la mise en oeuvre de plaques de dosages 6 amovibles permet un réglage du dosage par un réglage de la hauteur de la ou les colonnes de dosage 8. Ainsi, le nombre de plaque de dosage 6 est choisi en fonction de la quantité de particules solides 5 à charger dans l'enceinte ou les enceintes du réacteur. Les plaques 6 amovibles présentent l'avantage d'obtenir ainsi un dispositif 1 rapidement et facilement adaptable, non seulement pour ce qui concerne la quantité de particules 5 à charger dans un même réacteur, mais également adaptable aux différents types ou formes de réacteurs.

Les moyens de réglage du dosage peuvent comprendre en outre, ou être constituées, d'une plaque intermédiaire 10 mobile, éventuellement également amovible, en complément des plaques de dosages 6 amovibles ou en substitution de l'une d'entre elles. Cette plaque intermédiaire 10 mobile permet d'isoler une portion, plus ou moins importante, de la ou des colonnes de dosage 8. Elle permet également aux moyens de réglage de passer d'une position dite « fermée » dans laquelle la portion de la ou des colonnes de dosage 8 est obturée, à une position dite « ouverte » permettant la libération des particules solides 5 comprises dans ladite portion de la ou des colonnes de dosage 8. De préférence, la plaque intermédiaire 10 mobile est mobile en translation ou en rotation, dans un plan horizontal, pour permettre de passer de la position fermée à la position ouverte, son actionnement se faisant manuellement ou automatiquement par des moyens électrique ou pneumatiques. Faite de tout matériau adéquat, de toute forme adéquate, de préférence parallélépipédique, avantageusement carrée, rectangulaire ou circulaire, de section transversale carrée ou rectangulaire, et d'une épaisseur inférieure à celle des plaques de dosage 6, elle s'intercale et glisse entre deux plaques de dosage 6 pour obturer une portion de la ou des colonnes de dosage 8 et permettre le remplissage de ladite portion avec des particules solides 5, puis, par son retrait, de libérer une quantité de particules de solides 5 inférieure à celle correspondante à une hauteur complète de colonne de dosage.

La plaque intermédiaire 10 mobile peut comprendre en outre des perforations 11, la position fermée des moyens de réglage étant obtenue lorsque les perforations 11 ne se trouvent pas en rapport avec les perforations 7 des plaques de dosage 6, la position ouverte étant obtenue en mettant ses performations en rapport avec celles des plaques de dosage 6 (figure 8).

Dans un mode particulier de réalisation de l'invention, en position fermée, certaines perforations 11 de la plaque intermédiaire 10 mobile peuvent être en rapport avec celles des plaques de dosage 6 et d'autres non, ce qui présente l'avantage de permettre un dosage différentié entre les enceintes d'un même réacteur.

De préférence, et quelque soit le mode de réalisation de la plaque intermédiaire 10 mobile, son déplacement se fait soit manuellement, soit automatiquement, de préférence par des moyens d'entrainement électriques ou pneumatiques, par exemple du type vérin.

L'emploi d'une plaque intermédiaire 10 mobile présente l'avantage de rendre le dispositif 1 selon l'invention modulable, pour un remplissage des enceintes d'un même réacteur avec des doses différentes de particules solides 5, mais le rend également modulable en fonction du type de réacteurs à remplir. De plus, le dispositif 1 présente l'avantage de comprendre une large amplitude de dosage, la dose la plus grande étant celle correspondant à l'empilement maximale possible des plaques de dosage 6 et la plus petite étant celle correspondante à l'épaisseur, et la taille des perforations 7, d'une seule plaque de dosage 6, la plaque intermédiaire 10 mobile étant disposée en partie supérieure des moyens de dosage 4, entre la première et la seconde plaque de dosage 6.

Dans un mode de réalisation particulier, l'ensemble des plaques de dosage 6 repose sur une plaque 12 en acier inoxydable, fixée au châssis 2, et dotée d'une ou plusieurs perforations en rapport avec la ou les colonnes de dosage 8, les perforations ayant une ou des forme(s) et des dimensions identiques ou compatibles avec les perforations de la plaque de dosage 6 adjacente supérieure. Cette plaque 12 en acier inoxydable permet le maintient des moyens de libération simultanée lorsque ces derniers sont actionnés.

De préférence, le dispositif 1 comprend des moyens de libération simultanée des particules solides des moyens de dosage. Avantageusement, ces moyens se présentent sous la forme d'une plaque de libération 13 mobile, éventuellement également amovible. Cette plaque de libération 13 permet aux moyens de dosage 4 de passer d'une position dite « inactivée », ou « fermée », dans laquelle l'extrémité inférieure de la ou des colonnes de dosage 8 est obturée, permettant ainsi leur remplissage, à une position dite « activée », ou « ouverte », permettant la libération des particules solides 5 comprises dans la ou les colonnes de dosage 8. De préférence, la plaque de libération 13 est mobile en translation ou en rotation, dans un plan horizontal, pour permettre de passer de la position fermée à la position ouverte. Faite de tous matériau adéquat, et d'une épaisseur inférieure à celle des plaques de dosage 6, elle est disposée en dessous des moyens de dosage 4, de préférence sous la plaque 12 en acier inoxydable, dans le mode de réalisation où cette dernière est présente.

De préférence, la plaque de libération 13 comprend en outre des perforations, la position « fermée » des moyens de dosage 4 étant obtenue lorsque les perforations ne se trouvent pas en rapport, en face, avec celles de la plaque de dosage 6 inférieure, et la position « ouverte » étant obtenue lorsque les perforations sont alignées. Ces perforations peuvent être de la même forme et dimension que celles des plaques de dosage 6, au moins que celles de la plaque de dosage 6 inférieure. Néanmoins, elles peuvent être d'une dimension inférieure afin de restreindre le passage à une particule solide 5 à la fois. Par exemple, si les perforations des plaques de dosages 6 sont circulaires et ont un diamètre compris entre 30 et 36 mm, les perforations de la plaque de libération 13 peuvent être circulaires et avoir un diamètre de 12, 14, 16 ou 18mm. Dans ce mode de réalisation particulier, la plaque de libération 13 peut être revêtue d'un garnissage amortissant afin de limiter au maximum la dégradation éventuelle des particules, par chocs ou ricochet pouvant être source de poussières.

L'actionnement des moyens de libération des particules solides 5 peut se faire fait soit manuellement, soit automatiquement, de préférence par des moyens d'entrainement électriques ou pneumatiques, par exemple du type vérin.

Le dispositif 1 selon l'invention comprend en outre un bac de stockage 14, disposé en haut du dispositif 1 selon l'invention, en partie supérieure des moyens de dosage 4, et donc de la ou des colonnes de dosage 8.

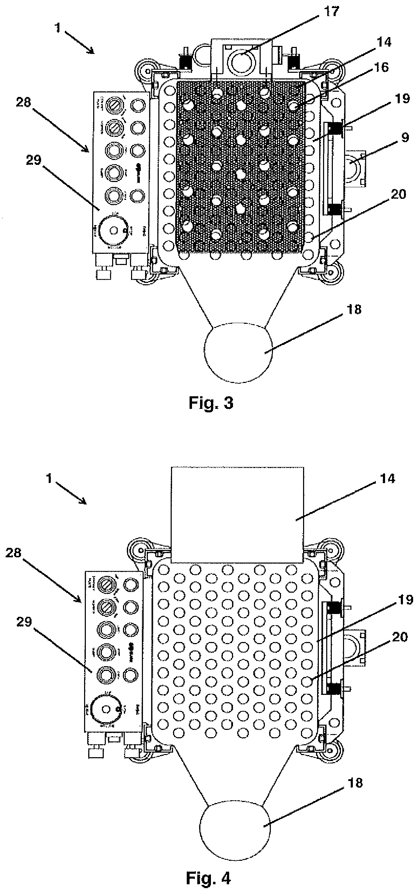

Le bac de stockage 14 a une forme et des dimensions adéquates et compatibles avec le dispositif 1. Il peut avoir des dimensions identiques ou sensiblement identiques à celles des moyens de dosage 4, mais il peut également être plus petit comme représenté à la figure 3.

Le bac de stockage 14 est de préférence mobile, avantageusement amovible, ce qui présente l'avantage de faciliter l'accès aux moyens de dosage 4. Dans un mode de réalisation particulier le bac de stockage 14 est mobile grâce à des moyens formant charnière 15 permettant son pivotement par rapport au châssis 2 du dispositif 1, d'une position dite « levée » à une position dite « abaissée » qui est le position normale d'utilisation du bac pour le remplissage des moyens de dosage et pouvant adopter toutes les postions intermédiaires.

Quelque soit le mode de réalisation du bac de stockage 14, ce dernier comprend un fond comprenant des perforations 16, ou trous débouchant, et des moyens de déstockage.

Dans un mode de réalisation particulier, les moyens de déstockage sont constitués par, ou mettent en œuvre, les perforations 16 du bac de stockage 14. Ces moyens sont dits « inactivés », ou « fermés », lorsque les perforations 16 ne se trouvent pas en regard, ou en rapport, ou seulement partiellement, avec l'ouverture des colonnes de dosage 8 (figure 3). Ces moyens sont généralement en position « fermée », avant et pendant, la réception des particules solides 5 dans le bac de stockage 14.

Dans un autre mode de réalisation particulier, les perforations 16 au fond du bac 14 sont en regard de l'ouverture supérieure des colonnes de dosage 8, et les moyens de déstockage comprennent une plaque de déstockage qui les obstrue. La plaque de déstockage est mobile, de préférence en translation ou en rotation, avantageusement dans un plan horizontal, et elle est éventuellement également amovible. Elle peut passer d'une position dite « fermée » dans laquelle les particules solides 5 sont retenues dans le bac de stockage 14, à une position dite « ouverte » permettant la libération des particules solides 5 du bac 14 dans la ou les colonnes de dosage 8.

Ainsi, les moyens de déstockage présentent l'avantage de permettre un remplissage contrôlé de la ou des colonnes de dosage 8 en empêchant son ou leur remplissage trop rapide. En effet, lors du déversement des particules solides 5 dans le bac de stockage 14, et de par la présence de perforations au fond du bac de stockage, la ou les colonnes de dosage se trouvant directement sous l'écoulement des particules solides 5 sont susceptibles d'être l'objet de bourrages ou d'être, de par la force de l'écoulement, plus remplies de particules solides 5 par un effet de tassement que des colonnes de dosage 8 situées en périphérie.

De préférence, le bac de stockage 14 comprend, ou coopère, en outre avec des moyens de vibration 17 ou d'oscillation, permettant d'imprimer au bac de stockage 14 un mouvement horizontal, ou sensiblement horizontal, de préférence un mouvement de vas-et-vient ou un mouvement orbital. Ces moyens de vibration 17 comprennent, ou sont constitués, par exemple, d'un vibreur ou d'un ensemble de cames mobiles autour d'un axe et venant en contact, directement ou indirectement, avec une partie, de préférence au moins une paroi formant le bord du bac de stockage 14. Avantageusement, ces moyens de vibration 17 peuvent être identiques, ou partager tout ou partie, des moyens de vibration 9 des moyens de dosage 4, en particulier pour le mode de réalisation mettant en ouvre des cames, leur axe de rotation est de préférence également celui des cames des moyens de vibration 9 des moyens de dosage 4.

Ainsi, comme les moyens de dosage 4 selon l'invention, le bac de stockage 14, avec ces moyens de déstockage et les moyens de vibration 17 ou d'oscillation dudit bac 14, participe à empêcher la formation de bourrages au niveau de la colonne ou des colonnes de dosage 8. Par conséquent, le chargement et le déchargement des particules solides 5 dans la ou les colonnes de dosage 8 sont plus efficaces, et constants, et le remplissage de l'enceinte ou des enceintes du réacteur s'en trouve amélioré.

Le dispositif 1 comprend, de préférence, des moyens d'évacuation du surplus de particules solides des moyens de dosage. Ces moyens comprennent, par exemple, une racle ou une brosse, pour araser le haut de la ou des colonnes de dosage 8, un bec verseur 18 positionné au niveau de la plaque de dosage 6 supérieure, un bac de récupération disposée sous le bec verseur 18 et réceptionnant l'excédent de particules solides 5 via ledit bec verseur 18, pour que les particules solides 5, ainsi récupérées, puissent être réutilisées lors d'un chargement ultérieur.

Les moyens d'évacuation du surplus de particules solides peuvent faire partie intégrante du bac de stockage 14, le bec verseur 18 pouvant, par exemple, être disposé sur, ou intégré à, une des parois du bac de stockage 14. Toutefois, il est également envisageable que ces moyens d'évacuation comprennent une plaque 19, de 1 à 5 mm d'épaisseur par exemple, comprenant des perforations 20 de forme(s) et de dimensions identiques ou compatibles avec les perforations de la plaque de dosage supérieure, une plaque 19 ayant une forme et des dimensions adéquates afin d'être disposée au dessus de la plaque de dosage 6 supérieure et sous le fond du bac de stockage 14, quand se dernier est en position rabattue, la plaque 19 comprenant, sur l'un de ces bords, le bec verseur 18 permettant l'évacuation de l'excédent de particules solides 5 (figures 3 et 4).

Le dispositif 1 selon l'invention comprend des moyens de récupération 21 des poussières formées par et au cours l'utilisation du dispositif 1 selon l'invention. Ces moyens 21 sont disposés à la fois au niveau du bac de stockage 14 des particules solides 5 et au niveau de la jonction entre les moyens de dosage 4 et l'enceinte ou les enceintes du réacteur, ce qui présente l'avantage d'améliorer significativement la protection du manipulateur du dispositif 1 selon l'invention contre la production de poussières.

Les premier et second moyens de récupération 21a et 21b de la poussière peuvent être identiques ou différents selon qu'ils se situent en haut ou en bas du dispositif 1.

De préférence, les premiers moyens de récupération 21a de la poussière, localisés au niveau du bac de stockage 14, comprennent au moins une entrée d'air, au moins une sortie d'air, et des moyens de génération d'une circulation d'air comprenant, par exemple, un ventilateur ou un aspirateur 22 et des conduites 23.

Dans un mode de réalisation particulier du bac de stockage 14, l'entrée d'air des premiers moyens de récupération 21a de la poussière est pratiquée sur le fond du bac de stockage 14, ainsi que sur tout ou partie de la surface d'au moins une parois latérale du bac de stockage 14, la sortie d'air étant pratiquée dans une paroi latérale du bac de stockage 14 et communiquant avec des trous débouchant dans la lumière des perforations 16 du fond du bac de stockage 14 par lesquelles les particules solides 5 circules vers les moyens de dosage 4.

De préférence, les seconds moyens de récupération 21b de la poussière, localisés entre les moyens de dosage 4 et l'enceinte ou les enceintes du réacteur, avantageusement localisés sous les moyens de libération simultanée des particules solides 4, sous la plaque de libération 13, comprennent au moins une entrée d'air, de préférence pratiquée sur la tranche du châssis 2 du dispositif 1, et au moins une sortie d'air et des moyens de génération d'une circulation d'air, qui peuvent être identiques aux ou être ceux des moyens de récupération 21a de la poussière du bac de stockage 14.

Dans un mode de réalisation particulier de l'invention, les seconds moyens de récupération 21b de la poussière comprennent des orifices de récupération de la poussière qui sont disposés tout autour des trous de la plaque de libération 13, et autour des trous de la plaque inoxydable sur laquelle repose les moyens de dosage 4. Ainsi, la poussière des particules 5 peut facilement passer aux travers des orifices de récupération de poussière pour arriver directement dans la zone du compartiment d'aspiration.

De préférence, les seconds moyens de récupération 21b de la poussière comprennent des moyens de contrôle permettant la mise en œuvre des premiers moyens et/ou des seconds moyens de génération d'une circulation d'air. De préférence, ces moyens de contrôle comprennent une vanne 24, avantageusement une vanne trois voies, contrôlée manuellement ou automatiquement par des moyens de contrôle, qui peuvent comprendre un vérin 25 (figures 1 et 5).

Dans un mode de réalisation particulier, les seconds moyens de récupération 21b de la poussière comprennent une vanne 24 trois voies comprenant un tube en acier, de 60 mm diamètre par exemple, et comprend une ouverture, de préférence elliptique, réalisée par exemple par perçage. Une extrémité de ce tube est obstruée tandis que l'autre est relié à un flexible d'aspiration 23, lui même relié à un groupe d'aspiration 22. Ce tube est en liaison pivot dans un châssis en plastique, comprenant deux conduits. Le tube peut être mis en rotation autour de son axe grâce à un vérin 25. Selon la position « rentré » ou « sortie », de la tige du vérin 25, le tube peut adopter au moins deux positions angulaires distinctes. Dans l'une des positions, l'ouverture elliptique est en face d'un des conduits, dans l'autre, l'ouverture est en face de l'autre conduit. Le premier conduit est relié au bloc d'aspiration inférieur, alors que l'autre conduit est relié au bloc d'aspiration du bloc de stockage 14. Ainsi selon la position angulaire du tube de la vanne 24 trois voies, l'aspiration est orientée soit vers la partie inférieure ou soit vers la partie supérieure du dispositif 1.

Le dispositif 1 selon l'invention peut comprendre en outre des moyens de mise en position de la ou les colonnes de dosage 8 en rapport avec l'enceinte ou les enceintes du réacteur à charger.

Dans un mode de réalisation particulier, ces moyens de mise en position sont constitués ou comprenne une plaque de centrage 26 qui présente l'avantage d'aligner la les colonnes de dosage 8 au-dessus de l'ouverture de l'enceinte ou des enceintes du réacteur à remplir. De préférence, la plaque de centrage 26 est reliée au châssis 2 par l'intermédiaire de plusieurs liaisons pivot-glissant lui permettant d'être mobile verticalement par rapport au châssis 2. Lors du déplacement du dispositif 1 selon l'invention, la plaque de centrage 26 est en position haute et lorsque le dispositif 1 est prêt à décharger les particules solides 5, elle passe en position basse pour se trouver en contact avec le sommet des enceintes du réacteur. Ainsi une fois la plaque de centrage 26 en contact avec le réacteur, le dispositif selon l'invention est maintenue en position.

De préférence, la forme du contour de la plaque de centrage 26 est identique à celle d'une éventuelle plaque bouchon 27 de protection de ou des enceintes à charger. Par exemple, elle peut être sensiblement carrée ou rectangulaire, recouvrir trois, six ou quatre-vingt-dix-neuf enceintes du réacteur, et avoir une largeur et une longueur comprises entre 4mm et 42mm, pour une épaisseur d'environ 5mm. Deux côtés de cette plaque de centrage 26 peuvent avoir un contour en dent de scie, les deux autres pouvant être en forme de créneaux.

Le dispositif 1 selon l'invention peut comprendre en outre des moyens de contrôle 28 des différents moyens constituant le dispositif 1 selon l'invention. Ils peuvent comprendre des moyens logiciels et/ou matériels. Par exemple, ils peuvent comprendre un panneau de contrôle 29 permettant d'activer ou désactiver les différentes fonctions du dispositif 1, un microprocesseur, afin de rendre automatique certaines fonctions, comme afficher des informations ou interdire certaines séquences de fonctionnement.

Le dispositif 1 selon l'invention est particulièrement adapté au dosage et au remplissage d'au moins une enceinte, avantageusement d'une multitude d'enceintes, d'un réacteur à lit de catalyseur fixe, avec des particules solides 5 à l'état divisé, de préférence des particules 5 de catalyseur, sous la forme de billes, de granules cylindriques, de bâtonnets ou de pastilles.

Le dispositif 1 permet le remplissage d'une, de dix, vingt ou cent enceintes simultanément de manière à couvrir le plus efficacement possible la surface, ou un secteur de la surface, d'un réacteur catalytique. De préférence, le dispositif 1 de remplissage de cent tubes est adapté pour remplir les enceintes des zones centrales d'un réacteur catalytique, et les dispositifs d'une, trois ou vingt enceintes sont particulièrement adaptés à remplir les pourtours du réacteur. Le dispositif selon l'invention peut également être facilement dimensionné pour remplir plus de cent enceintes simultanément.

S'agissant d'un dispositif 1 de remplissage et de dosage de particules solides 5, il est avantageux de prévoir une étape préalable de calibrage, de réglage de la quantité de particules solides 5 à charger dans l'enceinte ou les enceintes avant leur remplissage. Pour cela, l'utilisateur peut régler la hauteur des colonnes de dosage 8 en ajoutant ou supprimant des plaques de dosage 6 et/ou en utilisant une plaque intermédiaire 10 disposée entre des plaques de dosage 6 pour former une hauteur de colonne de dosage 8 donnée. En effet, l'épaisseur des plaques de dosage 6 et la dimension de leurs perforations 7 étant connues, il est aisé d'adapter la hauteur des colonnes de dosage 8 au volume de particules solides 5 à utiliser pour remplir l'enceinte ou les enceintes de réaction.

De préférence, après avoir vérifié que l'enceinte ou les enceintes du réacteur sont vides, l'opérateur met en place une plaque ou un ensemble de plaques, dites plaque bouchons 27, avantageusement faites d'un matériau plastique, obturant temporairement l'enceinte ou l'ensemble des enceintes. S'agissant d'une multitude de plaques bouchons 27, il peut être avantageux de prévoir qu'elles soient de couleurs différentes afin que l'opérateur puisse identifier facilement les différentes zones du réacteur, certaines zones à remplir pouvant être marquées d'une certaine couleur, les zones remplies d'une autre couleur, et les zones laisser vide d'une troisième couleur. Il est également possible de prévoir qu'après le chargement d'une zone, un code couleur l'identifie comme une zone chargée, mais non vérifiés. Pour l'étape de jaugeage, l'opérateur enlève la plaque bouchon 27 de couleur, vérifie la hauteur de chargement de particules solides 5 avec une ou plusieurs tiges, rectifie le chargement si besoin, puis referme les enceintes chargés et vérifiés avec une plaque bouchon 27 d'une autre couleur, ou la même plaque bouchon 27 comprenant une pastille d'une autre couleur. Ainsi, en fonction de la couleur des plaques bouchon 27 ou des pastilles collées sur les plaques bouchon 27, l'opérateur sait si les enceintes situées en dessous sont vides, ou chargés et non validés, ou chargés et validés.

Lorsque le dispositif 1 est positionné au dessus de l'enceinte ou des enceintes, la ou les plaques bouchon 27 du réacteur est ou sont retirée(s) et la plaque de centrage 26 est mise en œuvre afin de positionner correctement la ou les colonnes de dosage 8 du dispositif 1 au dessus de l'ouverture de l'enceinte ou des enceintes. La plaque de centrage 26, qui de préférence a la même forme que la plaque bouchon 27, est alors bloquée en translation horizontale par les plaques bouchons 27 entourant la plaque bouchon 27 retirée, ce qui permet de positionner, et maintenir, correctement le dispositif 1 en regard des enceintes du réacteur.

Le remplissage du dispositif 1 avec les particules solides 5 peut avoir lieu avant sa présentation au-dessus de l'enceinte ou des enceintes, ou bien lorsqu'il est déjà en position pour leur remplissage. Dans les deux cas, les moyens de libération simultanée des particules solides 5 ne sont pas activés, et se trouvent donc en position fermée, durant le chargement en particules solides 5.

L'opérateur déverse les particules solides 5 dans le bac de stockage 14 dont les perforations 16 de sa paroi formant le fond ne sont pas en regard avec la lumière des colonnes de dosage 8, ou qui sont obturées par les moyens de déstockage, la plaque de stockage étant dans sa position fermée. Puis, l'opérateur répartit manuellement les particules solides 5 dans le bac de stockage 14, ou met en œuvre les moyens de vibration 17 du bac de stockage 14, afin d'obtenir une épaisseur homogène de particules solides 5 dans le bac 14, pour ensuite les libérer dans la ou les colonnes de dosage 8, en mettant en rapport les perforations 16 du fond du bac avec l'ouverture de la ou les colonnes de dosage 8 ou en actionnant la plaque de déstockage afin de la passer en position ouverte, les moyens de vibration 17 du bac de stockage 14 pouvant être activés durant cette étape.

Avant ou pendant le versement des particules solides 5 et/ou l'activation des moyens de vibration 17 du bac 14 et/ou la libération des particules dans la ou les colonnes de dosage 8, l'opérateur peut mettre en œuvre les moyens de récupération 21a de la poussière au niveau du bac de stockage.

La ou les colonnes de dosages sont remplies jusqu'à ce que les particules solides 5 affleurent l'ouverture supérieure de la colonne ou des colonnes de dosage 8, de préférence lorsqu'elles affleurent le fond du bac de stockage 14, les moyens de vibration 9 des moyens de dosage 4 pouvant être activés avant et/ou pendant cette étape.

L'opérateur évacue ensuite l'excédent de particules solides 5 restantes au niveau de la dernière plaque de dosage 6, de préférence à l'aide d'une racle ou une brosse, vers un bec verseur 18, en forme d'entonnoir qui communique avec un bac de récupération.

Une fois les colonnes de dosage 8 remplies, l'opérateur peut déverser les particules solides 5 dans l'enceinte ou les enceintes du réacteur, en mettant en œuvre la plaque intermédiaire 10 mobile des moyens de réglage du dosage, si nécessaire, et la plaque de libération 13 mobile des moyens de libération des particules solides 5, de préférence en mettant en œuvre les moyens de vibration 9 des moyens de dosage, et avantageusement également en mettant en œuvre les seconds moyens de récupération 21b de la poussière qui se trouvent au niveau de la jonction entre les moyens de dosage 4 et l'enceinte ou les enceintes du réacteur.

Lorsque la ou les colonnes de dosage sont vides, l'opérateur peut arrêter les moyens de vibration 9 des moyens de dosage 4 et les seconds moyens récupération 21b de la poussière et repositionner les moyens de libération, et si nécessaire les moyens de réglage du dosage, en position fermée.

De préférence, l'opérateur contrôle la hauteur de remplissage de chaque enceinte afin de contrôler leur chargement. Si l'enceinte ou les enceintes du réacteur qui vient ou viennent d'être remplies ne le sont pas suffisamment en un chargement, l'opérateur répète les opérations décrites ci-dessus, éventuellement à l'exception de l'étape de calibrage des moyens de dosage 4, jusqu'à obtenir la hauteur de particules solides 5 désirée dans l'enceinte ou les enceinte du réacteur.

Une fois la hauteur de particules solides 5 désirée obtenue, après éventuellement un nouveau contrôle de la hauteur des particules solides 5 dans l'enceinte ou les enceintes, l'opérateur enlève le dispositif 1 et remonter la plaque de centrage 26. De préférence, il obture les enceintes remplies à l'aide d'une plaque bouchon 27.

## Revendications

1. Dispositif (1) mobile de remplissage d'une ou plusieurs enceintes avec des particules solides (5) à l'état divisé, ledit dispositif (1) comprenant :
- un châssis (2) mobile,
- des moyens de dosage (4) desdites particules solides (5) comprenant deux ou plusieurs plaques de dosage (6) comprenant une ou plusieurs perforations (7), lesdites plaques de dosage (6) étant disposées l'une sur l'autre afin que la ou les perforations (7) d'une plaque de dosage (6) soi(en)t en rapport avec la ou les perforations (7) de la plaque de dosage (6) adjacente, pour former une ou plusieurs colonnes de dosage (8), destinées à être mises en rapport avec ladite ou lesdites enceintes,
- des moyens de libération simultanée desdites particules solides (5) desdits moyens de dosage (4) vers ladite ou lesdites enceintes,
- un bac de stockage (14) desdites particules solides (5) qui comprend une paroi de fond comprenant des perforations (16) étant, ou pouvant se mettre, en rapport avec ladite ou lesdites colonnes de dosage (8), et comprenant des moyens de déstockage libérant lesdites particules solides (5) dudit bac de stockage (14) vers ladite ou lesdites colonnes de dosage (8).

2. Dispositif (1) selon la revendication 1, dans lequel l'une des deux plaques de dosage (6), ou une première série de plaques de dosage (6), est ou sont fixe(s) par rapport au châssis (2) dudit dispositif (1), et l'autre plaque (6), ou une seconde série de plaques de dosage (6), est ou sont mobile(s), par rapport à la ou lesdites plaques de dosage (6) fixe(s), dans un mouvement sensiblement horizontal.

3. Dispositif (1) selon la revendication 2, dans lequel le mouvement de la plaque ou des plaques de dosages (6) mobile(s) se fait au moyen d'un arbre à cames, dont les cames viennent en contact avec au moins un bord de ladite ou lesdites plaques (6) mobiles.

4. Dispositif (1) selon l'une quelconque des revendications précédentes, comprenant des moyens de régalage du dosage en particules solides (5) comprenant une plaque intermédiaire (10) mobile, éventuellement amovible, passant d'une position dite « fermée » dans laquelle une portion de la ou des colonnes de dosage (8) est obturée, à une position dite « ouverte », permettant la libération des particules solides (5) comprises dans ladite portion de la ou des colonnes de dosage (8), et inversement, ou lesdits moyens de régalage étant constitués par les plaques de dosages (6) qui sont toutes, ou certaines seulement, amovibles.

5. Dispositif (1) selon la revendication 4, dans lequel la plaque intermédiaire (10) mobile comprend des perforations (11) qui, lorsque ladite plaque intermédiaire (10) mobile adopte la position « fermée », ne sont pas en rapport avec la ou les colonnes de dosage (8), et sont en rapport avec ladite ou lesdites colonnes de dosage (8) lorsque ladite plaque intermédiaire (10) mobile adopte la position « ouverte ».

6. Dispositif (1) selon l'une quelconque des revendications précédentes, dans lequel la ou les colonnes de dosage (8) a, ou ont, une forme sensiblement conique.

7. Dispositif (1) selon l'une quelconque des revendications précédentes, dans lequel les moyens de déstockage du bac de stockage (14) comprennent une plaque de déstockage mobile passant d'une position « fermée », dans laquelle les particules solides (5) sont retenues dans ledit bac de stockage, à une position dite « ouverte », permettant la libération desdites particules solides (5) dudit bac de stockage (14) vers la ou les colonnes de dosage (8), et inversement, ou lesdits moyens de déstockage sont constitués des perforations (16) dudit bac de stockage (14) qui ne se trouvent pas en regard, ou seulement partiellement, avec l'ouverture de ladite ou desdites colonnes de dosage (8), avant et pendant, la réception des particules solides (5) dans ledit bac de stockage (14).

8. Dispositif (1) selon l'une quelconque des revendications précédentes, comprenant en outre des moyens de récupération (21) des poussières formées par et au cours de l'utilisation dudit dispositif (1) comprenant des premiers moyens (21a) disposés au niveau du bac de stockage (14) des particules solides (5) et des seconds moyens (21b) disposés au niveau de la jonction entre les moyens de dosage (4) et l'enceinte ou les enceintes du réacteur.

9. Utilisation du dispositif (1) selon l'une quelconques des revendications précédentes pour le dosage et le remplissage d'une ou plusieurs enceintes d'un réacteur à lit de catalyseur fixe, avec des particules solides (5) de catalyseur à l'état divisé.

10. Méthode de dosage et de remplissage d'une ou plusieurs enceintes comprenant les étapes suivantes :
- prendre le dispositif (1) selon l'une des revendications 1 à 8, et le disposer au-dessus de ladite ou lesdites enceintes, de façon à ce que la ou les colonnes de dosage (8) se trouve(nt) en rapport avec l'ouverture supérieure de ladite ou desdites enceintes,
- verser des particules solides (5) à l'état divisé dans le bac de stockage dont les moyens de déstockage sont en position fermée, les moyens de libération simultanée étant inactivés,
- répartir lesdites particules solides (5) dans ledit bac de stockage (14),
- activer les moyens de déstockage afin de libérer les particules solides (5) dans la ou les colonnes de dosage (8),
- remplir ladite ou lesdites colonnes de dosage (8) avec lesdites particules solides (5) jusqu'à affleurer le fond dudit bac de stockage (14) ou à affleurer l'ouverture supérieure de ladite ou lesdites colonnes de dosage (8),
- évacuer l'excédent desdites particules solides (5) dudit bac de stockage (14) vers un bac de récupération,
- ouvrir les moyens de libération simultanée desdites particules solides (5) pour remplir ladite ou lesdites enceintes du réacteur et les refermer lorsque ladite ou lesdites enceintes sont remplies.

11. Méthode de dosage et de remplissage selon la revendication 10, comprenant en outre une étape d'activation des moyens de vibration (17) ou d'oscillation du bac de stockage (14) avant et/ou pendant l'activation des moyens de déstockage, et/ou une étape d'activation des moyens de vibration (9) ou d'oscillation des moyens de dosage (4) avant et/ou pendant le remplissage et/ou la décharge de la colonne ou des colonnes de dosage (8).

12. Méthode de dosage et de remplissage selon l'une quelconque des revendications 10 ou 11, comprenant en outre une étape d'activation des moyens de récupération (21a) des poussières au niveau du bac de stockage durant l'étape de versement des particules solides (5) dans ledit bac de stockage (14) et/ou durant l'activation des moyens de déstockage, et/ou une étape d'activation des moyens de récupération (21b) des poussières au niveau au niveau de la jonction entre les moyens de dosage (4) et l'enceinte ou les enceintes du réacteur.

13. Méthode de dosage et de remplissage selon l'une quelconque des revendications 10 à 12, comprenant en outre une étape préalable de calibrage du dispositif (1) en réglant la hauteur de la colonne ou des colonnes de dosage (8), en ajoutant ou supprimant des plaques de dosage (6) et/ou en utilisant une plaque intermédiaire (10) disposée entre des plaques de dosage (6) pour former une hauteur de colonne de dosage (8) donnée, ladite plaque intermédiaire (10) passant de la position fermée à la position ouverte avant, ou de façon concomitante, avec l'activation des moyens de libération simultanée.

14. Méthode de dosage et de remplissage selon l'une quelconque des revendications 10 à 13, comprenant en outre une étape de vérification du remplissage de l'enceinte ou des enceintes et si leur remplissage n'est pas suffisant, répéter les étapes de la méthode selon les revendications 10 à 13, éventuellement à l'exception de l'étape de calibrage du dispositif (1), jusqu'à attendre la hauteur de particules solides désirée dans ladite ou lesdites enceintes.

## Patentansprüche

1. Bewegliche Vorrichtung (1) zum Füllen einer oder mehrerer Kammern mit festen Partikeln (5) im geteilten Zustand, wobei die Vorrichtung (1) Folgendes umfasst:
- ein bewegliches Gestell (2),
- Mittel zum Dosieren (4) der festen Partikel (5), umfassend zwei oder mehrere Dosierplatten (6), welche eine oder mehrere Perforationen (7) umfassen, wobei die Dosierplatten (6) aufeinander angeordnet sind, damit die Perforation bzw. die Perforationen (7) einer Dosierplatte (6) in Beziehung mit der oder den Perforation(en) (7) der angrenzenden Dosierplatte (6) stehen, um eine oder mehrere Dosiersäulen (8) zu bilden, welche dazu bestimmt sind, mit der oder den Kammer(n) in Beziehung gebracht zu werden,
- Mittel zum gleichzeitigen Freisetzen der festen Partikel (5) aus den Dosiermitteln (4) in Richtung der Kammer bzw. der Kammern,
- einen Lagerungsbehälter (14) für die festen Partikel (5), umfassend eine Bodenwand, welche Perforationen (16) umfasst, welche in Beziehung mit der oder den Dosiersäule(n) (8) steht oder gehen kann, und umfassend Mittel zum Auslagern, welche die festen Partikel (5) aus dem Lagerungsbehälter (14) in Richtung der Dosiersäule bzw. der Dosiersäulen (8) freisetzt.

2. Vorrichtung (1) nach Anspruch 1, wobei eine der beiden Dosierplatten (6), oder eine erste Reihe von Dosierplatten (6) in Bezug auf das Gestell (2) der Vorrichtung (1) befestigt ist, und die andere Platte (6), oder eine zweite Reihe von Dosierplatten (6), in Bezug auf die feste(n) Dosierplatte(n) (6) in einer im Wesentlichen horizontalen Bewegung beweglich ist.

3. Vorrichtung (1) nach Anspruch 2, wobei die Bewegung der beweglichen Dosierplatte bzw. der beweglichen Dosierplatten (6) mithilfe einer Nockenwelle erfolgt, deren Nocken in Kontakt mit mindestens einem Rand der beweglichen Platte(n) (6) gehen.

4. Vorrichtung (1) nach einem der vorhergehenden Ansprüche, umfassend Mittel zum Nivellieren der Dosierung der festen Partikel (5), umfassend eine bewegliche Zwischenplatte (10), welche eventuell abnehmbar ist, welche von einer sogenannten "geschlossenen" Position, in welcher ein Abschnitt der Dosiersäule bzw. der Dosiersäulen (8) verschlossen ist, zu einer sogenannten "geöffneten" Position übergeht, welche die Freisetzung der festen Partikel (5) ermöglicht, welche in dem Abschnitt der Dosiersäule bzw. der Dosiersäulen (8) umfasst sind und umgekehrt, oder wobei die Nivelliermittel durch die Dosierplatten (6) gebildet werden, welche sämtlich oder nur einige davon, abnehmbar sind.

5. Vorrichtung (1) nach Anspruch 4, wobei die bewegliche Zwischenplatte (10) Perforationen (11) umfasst, welche, wenn die bewegliche Zwischenplatte (10) die "geschlossene" Position einnimmt, nicht in Beziehung mit der Dosiersäule bzw. den Dosiersäulen (8) stehen, und in Beziehung mit der Dosiersäule bzw. den Dosiersäulen (8) stehen, wenn die bewegliche Zwischenplatte (10) die "geöffnete" Position einnimmt.

6. Vorrichtung (1) nach einem der vorhergehenden Ansprüche, wobei die Dosiersäule bzw. die Dosiersäulen (8) eine im Wesentlichen konische Form aufweist bzw. aufweisen.

7. Vorrichtung (1) nach einem der vorhergehenden Ansprüche, wobei die Mittel zum Auslagern aus dem Lagerungsbehälter (14) eine bewegliche Auslagerungsplatte umfassen, welche von einer "geschlossenen" Position, in welcher die festen Partikel (5) in dem Lagerungsbehälter zurückgehalten werden, zu einer sogenannten "geöffneten" Position übergeht, welche die Freisetzung der festen Partikel (5) aus dem Lagerungsbehälter (14) in Richtung der Dosiersäule bzw. der Dosiersäulen (8) und umgekehrt ermöglicht, oder wobei die Mittel zur Auslagerung aus den Perforationen (16) des Lagerungsbehälters (14) gebildet sind, welche sich nicht oder nur teilweise gegenüber der Öffnung der Dosiersäule bzw. der Dosiersäulen (8) befinden, vor und während der Aufnahme der festen Partikel (5) in dem Lagerungsbehälter (14).

8. Vorrichtung (1) nach einem der vorhergehenden Ansprüche, ferner umfassend Mittel zur Rückgewinnung (21) von Stäuben, welche durch den Gebrauch und im Zuge des Gebrauchs der Vorrichtung (1) gebildet werden, umfassend erste Mittel (21a), welche im Bereich des Lagerungsbehälters (14) der festen Partikel (5) angeordnet sind und zweite Mittel (21b), welche im Bereich der Verbindung zwischen den Dosiermitteln (4) und der Kammer bzw. den Kammern des Reaktors angeordnet sind.

9. Gebrauch der Vorrichtung (1) nach einem der vorhergehenden Ansprüche zum Dosieren und Füllen einer oder mehrerer Kammern eines Reaktors mit festem Katalysatorbett, mit festen Katalysatorpartikeln (5) im geteilten Zustand.

10. Verfahren zum Dosieren und Füllen einer oder mehrerer Kammern, folgende Schritte umfassend:
- Nehmen der Vorrichtung (1) nach einem der Ansprüche 1 bis 8, und Anordnen derselben oberhalb der Kammer bzw. der Kammern in einer Weise, dass die Dosiersäule bzw. die Dosiersäulen (8) sich in Beziehung mit der oberen Öffnung der Kammer bzw. der Kammern befindet bzw. befinden,
- Gießen der festen Partikel (5) im geteilten Zustand in den Lagerungsbehälter, dessen Auslagerungsmittel in geschlossener Position stehen, wobei die Mittel zur gleichzeitigen Freisetzung deaktiviert sind,
- Verteilen der festen Partikel (5) in dem Lagerungsbehälter (14),
- Aktivieren der Auslagerungsmittel, um die festen Partikel (5) in die Dosiersäule bzw. die Dosiersäulen (8) freizusetzen,
- Füllen der Dosiersäule bzw. der Dosiersäulen (8) mit den festen Partikeln (5) bis zum Anliegen auf dem Boden des Lagerungsbehälters (14) oder bis zum Anliegen an der oberen Öffnung der Dosiersäule bzw. der Dosiersäulen (8),
- Ableiten des Überschusses der festen Partikel (5) aus dem Lagerungsbehälter (14) in Richtung eines Rückgewinnungsbehälters,
- Öffnen der Mittel zum gleichzeitigen Freisetzen der festen Partikel (5) zum Füllen der Kammer bzw. der Kammern des Reaktors und Wiederverschließen derselben, wenn die Kammer bzw. die Kammern gefüllt ist bzw. sind.

11. Verfahren zum Dosieren und Füllen nach Anspruch 10, ferner umfassend einen Schritt des Aktivierens der Vibrations- (17) oder Oszillationsmittel des Lagerungsbehälters (14) vor und/oder während der Aktivierung der Auslagerungsmittel, und/oder einen Schritt des Aktivierens der Vibrations- (9) oder Oszillationsmittel der Dosiermittel (4) vor und/oder während des Füllens und/oder der Auslagerung aus der Dosiersäule bzw. den Dosiersäulen (8).

12. Verfahren zum Dosieren und Füllen nach einem der Ansprüche 10 oder 11, ferner umfassend einen Schritt des Aktivierens der Mittel zur Rückgewinnung (21a) der Stäube im Bereich des Lagerungsbehälters während des Schrittes des Gießens der festen Partikel (5) in den Lagerungsbehälter (14) und/oder während der Aktivierung der Auslagerungsmittel, und/oder einen Schritt der Aktivierung der Mittel zur Rückgewinnung (21b) der Stäube im Bereich der Verbindung zwischen den Dosiermitteln (4) und der Kammer bzw. den Kammern des Reaktors.

13. Verfahren zum Dosieren und Füllen nach einem der Ansprüche 10 bis 12, ferner umfassend einen vorherigen Schritt des Kalibrierens der Vorrichtung (1) durch Einstellung der Höhe der Dosiersäule bzw. der Dosiersäulen (8), durch Hinzufügen oder Entfernen von Dosierplatten (6) und/oder durch Gebrauch einer Zwischenplatte (10), welche zwischen Dosierplatten (6) angeordnet ist, um eine gegebene Höhe der Dosiersäule (8) zu bilden, wobei die Zwischenplatte (10) von der geschlossenen Position in die geöffnete Position vor oder gleichzeitig mit der Aktivierung der Mittel zur gleichzeitigen Freisetzung übergeht.

14. Verfahren zum Dosieren und Füllen nach einem der Ansprüche 10 bis 13, ferner umfassend einen Schritt des Überprüfens der Füllung der Kammer bzw. der Kammern und, wenn ihre Füllung nicht ausreicht, Wiederholen der Schritte des Verfahrens nach einem der Ansprüche 10 bis 13, eventuell mit Ausnahme des Schrittes des Kalibriens der Vorrichtung (1), bis zum Erreichen der gewünschten Höhe der festen Partikel in der Kammer bzw. in den Kammern.

## Claims

1. A movable device (1) for filling one or more chambers with solid particles (5) in the divided state, said device (1) comprising:
- a movable frame (2),
- means (4) for metering said solid particles (5), comprising two or more metering plates (6) comprising one or more perforations (7), said metering plates (6) being arranged one on top of another so that the perforation or perforations (7) of a metering plate (6) is (are) in connection with the perforation or perforations (7) of the adjacent metering plate (6) to form one or more metering columns (8) intended to be placed in connection with said chamber or chambers,
- means for simultaneous release of said solid particles (5) from said metering means (4) toward said chamber or chambers,
- a tank (14) for storing said solid particles (5) that comprises a bottom wall comprising perforations (16) that are or may be placed in connection with said metering column or columns (8), and comprising unloading means that release said solid particles (5) from said storage tank (14) toward said metering column or columns (8).

2. The device (1) according to claim 1, wherein one of the two metering plates (6), or a first series of metering plates (6), is or are fixed relative to the frame (2) of said device (1), and the other plate (6), or a second series of metering plates (6), is or are movable relative to said fixed metering plate or plates (6), in a substantially horizontal movement.

3. The device (1) according to claim 2, wherein the movement of the movable metering plate or plates (6) is achieved by means of a camshaft, the cams of which come into contact with at least one edge of said movable plate or plates (6).

4. The device (1) according to any one of the preceding claims, comprising means for leveling the metering of solid particles (5) comprising a movable, optionally removable, intermediate plate (10) passing from a so-called "closed" position, in which a portion of the metering column or columns (8) is closed off, to a so-called "open" position, allowing the release of the solid particles (5) comprised in said portion of the metering column or columns (8), and vice versa, or said leveling means being formed by the metering plates (6), all, or only some, of which are removable.

5. The device (1) according to claim 4, wherein the movable intermediate plate (10) comprises perforations (11) that, when said movable intermediate plate (10) assumes the "closed" position, are not in connection with the metering column or columns (8) and are in connection with said metering column or columns (8) when said movable intermediate plate (10) assumes the "open" position.

6. The device (1) according to any one of the preceding claims, wherein the metering column or columns (8) has or have a substantially conical form.

7. The device (1) according to any one of the preceding claims, wherein the means for unloading the storage tank (14) comprise a movable unloading plate passing from a "closed" position, in which the solid particles (5) are held in said storage tank, to a so-called "open" position allowing the release of said solid particles (5) from said storage tank (14) toward the metering column or columns (8), and vice versa, or said unloading means are formed by the perforations (16) of said storage tank (14) that are not or are only partially opposite the opening of said metering column or columns (8) before and during receipt of the solid particles (5) in said storage tank (14).

8. The device (1) according to any one of the preceding claims, further comprising means (21) for recovering the dust formed by and during the use of said device (1), comprising first means (21a) arranged at the storage tank (14) of the solid particles (5) and second means (21b) arranged at the junction between the metering means (4) and the chamber or the chambers of the reactor.

9. Use of the device (1) according to any one of the preceding claims, for metering and filling one or more chambers of a fixed catalyst bed reactor with solid particles (5) of catalyst in the divided state.

10. A method for metering and filling one or more chambers, comprising the following steps:
- taking the device (1) according to one of claims 1 to 8 and arranging it above said chamber or chambers such that the metering column or columns (8) is or are in connection with the upper opening of said chamber or chambers,
- pouring solid particles (5) in the divided state into the storage tank, the unloading means of which are in the closed position, the simultaneous release means being inactivated,
- distributing said solid particles (5) in said storage tank (14),
- activating the unloading means in order to release the solid particles (5) into the metering column or columns (8),
- filling said metering column or columns (8) with said solid particles (5) until flush with the bottom of said storage tank (14) or flush with the upper opening of said metering column or columns (8),
- discharging the surplus of said solid particles (5) from said storage tank (14) toward a recovery tank,
- opening the means for simultaneous release of said solid particles (5) in order to fill said chamber or chambers of the reactor and to close same when said chamber or chambers is or are filled.

11. The metering and filling method according to claim 10, further comprising a step of activating means (17) for vibration or oscillation of the storage tank (14) before and/or during the activation of the unloading means and/or a step of activating the means (9) for vibration or oscillation of the metering means (4) before and/or during the filling and/or the unloading of the metering column or columns (8).

12. The metering and filling method according to any one of claims 10 or 11, further comprising a step of activating the means (21a) for recovering the dust at the storage tank during the step of pouring the solid particles (5) into said storage tank (14) and/or during the activation of the unloading means and/or a step of activating the means (21b) for recovering the dust at the junction between the metering means (4) and the chamber or the chambers of the reactor.

13. The metering and filling method according to any one of claims 10 to 12, further comprising a preliminary step of calibrating the device (1) by adjusting the height of the metering column or columns (8), adding or removing metering plates (6) and/or using an intermediate plate (10) arranged between metering plates (6) in order to form a given height for a metering column (8), said intermediate plate (10) passing from the closed position to the open position before or concomitantly with the activation of the simultaneous release means.

14. The metering and filling method according to any one of claims 10 to 13, further comprising a step of checking the filling of the chamber or of the chambers and, if the filling thereof is insufficient, repeating the steps of the method as claimed in claims 10 to 13, possibly with the exception of the step of calibrating the device (1), until the required height of solid particles in said chamber or chambers has been reached.
